# EUROPÄISCHE PATENTSCHRIFT

(11) **EP 2 454 203 B1**
(45) Veröffentlichungstag und Bekanntmachung des Hinweises auf die Patenterteilung: **13.08.2014**
(21) Anmeldenummer: 10732378.4
(22) Anmeldetag: 15.07.2010
(51) Int. Cl.: C02F 9/00, C02F 103/00, C02F 1/20, C02F 1/00, C02F 1/467

(54) **VORRICHTUNG UND VERFAHREN ZUR MOBILEN, OXIDATIVEN AUFBEREITUNG VON STARK VERUNREINIGTEM ABWASSER**
DEVICE AND METHOD FOR MOBILE, OXIDATIVE TREATMENT OF HIGHLY POLLUTED SEWAGE
DISPOSITIF ET PROCÉDÉ DE TRAITEMENT OXIDATIF MOBILE D'EAUX USÉES FORTEMENT POLLUÉES

(30) Priorität: 17.07.2009 DE 202009009805 U
(43) Veröffentlichungstag der Anmeldung: 23.05.2012
(73) Patentinhaber: Evac GmbH, 22880 Wedel (DE)
(72) Erfinder: LEHMANN, Eric, 22767 Hamburg (DE); MUNTANIOL, Leo, 21073 Hamburg (DE); SCHWARZKOPF, Sergej, 22761 Hamburg (DE); HERREROS GONZÁLEZ, Cristina, 22761 Hamburg (DE); GROTHE, Sascha, 22880 Wedel (DE)
(74) Vertreter: Eisenführ Speiser
(86) Internationale Anmeldenummer: PCT/EP2010/060207
(87) Internationale Veröffentlichungsnummer: WO 2011/006961

(56) Entgegenhaltungen:
- WO-A1-2008/124299
- DE-A1- 4 104 094
- US-A- 3 846 301
- US-A- 3 925 176
- US-A- 4 292 175
- US-A1- 2003 213 702

## Beschreibung

Die Erfindung betrifft eine Schwarzwasseraufbereitungs- und Speichervorrichtung für eine Bordtoilette an Bord eines Fahrzeugs,
umfassend:
- einen Abwassertank mit einer Zuleitungsöffnung zum Zuleiten von Schwarzwasser in den Abwassertank und einer Ableitungsöffnung zum Ableiten von Schwarzwasser aus dem Abwassertank,
- eine Zerkleinerungsvorrichtung zur Zerkleinerung von Grobbestandteilen im Schwarzwasser,
- einen Reaktorbehälter, der ausgebildet ist, um darin das Schwarzwasser einer oxidativen Abwasserreinigung zu unterziehen,
- einen Antischaumtank, der ausgebildet ist, um Schaum, der bei der Abwasserreinigung entsteht, zu reduzieren.

Ein weiterer Aspekt der Erfindung ist eine Bordtailette für ein Fahrzeug.

Vorrichtungen und Verfahren zur Schwarzwasseraufbereitung sind insbesondere als stationäre Kläranlagen bekannt, in denen die gesammelten Abwässer einer Stadt solcher Art gereinigt und aufbereitet werden, dass sie im Idealfall Trinkwasserqualität aufweisen, zumindest aber eine solche Qualität, dass sie so schadstoffbefreit sind, dass sie einem natürlichen Flusslauf zugeführt werden können. Solche Kläranlagen reinigen und bereiten In der Regel eine Mischung aus Grauwasser und Schwarzwasser auf, wobei unter Grauwasser solches Wasser verstanden werden soll, dass nur geringfügig Partikel belastet ist, wie es beispielsweise in dem Ablauf eines Waschbeckens, einer Waschoder Spülmaschine im Haushalt entstammt und unter Schwarzwasser solches Wasser verstanden werden soll, welches stark mit Partikeln und Grobstoffen belastet ist, wie es beispielsweise dem Abfluss einer Toilette entstammt.

Für Bordtoiletten an Bord von Fahrzeugen, wie beispielsweise gleisgebundenen Fahrzeugen wie Zügen oder Reisebussen, aber auch Flugzeugen ist es grundsätzlich bekannt, dass in der Bordtoilette anfallende Schwarzwasser an Bord des Fahrzeugs in einem Abwassertank zu speichern, solange das Fahrzeug sich bewegt oder an einem Standort ohne Entsorgungsmöglichkeit steht Das solcher Art gespeicherte Schwarzwasser wird mittels einer stationären Kläranlage gereinigt und aufbereitet, indem es aus dem Abwassertank abgepumpt bzw. in einen Behälter abgelassen wird, dann zu der stationären Kläranlage transportiert wird und dort entsprechend gereinigt und aufbereitet werden kann. Unter einer stationären Kläranlage sind hierbei die ortsfest installierten Kläranlagen zu verstehen, hierunter können auch diejenigen Kläranlagen verstanden werden, die an Bord eines spezifischen Klärfahrzeugs installiert sind, dass zu dem Fahrzeug bewegt werden kann, dessen Abwassertank entleert werden soll.

Solche stationären Kläranlagen erfordern in der Regel ein erhebliches Bauvolumen und weisen ein erhebliches Gewicht auf. Es hat sich daher durchgesetzt, solche stationären Kläranlagen nur in wenigen Betriebsstandorten zu installieren, was wiederum zu der Notwendigkeit führt, verhältnismäßig große Abwassertankvolumen bereitzustellen, um den Betrieb der Bordtoilette über den Zeitraum zu gewährleisten, der zwischen dem Anlaufen solcher Betriebspunkte vergeht. Grundsätzlich ist es wünschenswert, die Notwendigkeit der Speicherung großer Abwassermengen an Bord eines Fahrzeugs zu vermeiden, da dies zu einerseits Gewicht und andererseits Bauraum innerhalb des Fahrzeugs in Anspruch nimmt. Gleichwohl ist es wünschenswert, die Wartungsintervalle von Abwassertanks an Bord eines Fahrzeugs zu verlängern, um die Wartungskosten zu verringern. Aus EP 1 868 946 B1 und EP 1 761 674 B1 sind Aufbereltungssysteme für Schwarzwasser bekannt, welche durch Zerkleinern und eine oxidative Abwasserreinigung das Schwarzwasser aus Sordtoiletten reinigen und aufbereiten. Grundsätzlich hat sich gezeigt, dass ein solches Verfahren gut dazu geeignet ist, um die Qualität des Schwarzwassers solcher Art zu verbessern, dass es in vereinfachter Weise entsorgt werden kann, insbesondere auch dem natürlichen Oberflächenwasser zugeführt werden kann oder als Grauwasser zur Spülung von Bordtoiletten dienen kann. Allerdings sind die in EP 1 868 946 B1 und EP 1 761 674 B1 beschriebenen Aufbereitungsanlagen weiter verbesserungsfähig dahingehend, dass sie kompakter gebaut und im Betrieb effizienter werden können, um einen wirtschaftlicheren Betrieb von Fahrzeugen mit Bordtoiletten zu ermöglichen.

Aus WO-A-2008/124299 ist eine Vorrichtung zur Behandlung von Abwässern und flüssigen Abfällen an Bord von Schiffen bekannt. Das Abwasser wird zunächst in einem Tank entschäumt durch Zugabe eines schaumunterdrückenden Mittels. Hierauf folgend wird das Abwasser zu einem Zerkleinerer und zurück zirkuliert. Hierauf folgend durchläuft das Abwasser einen Oxidationstank.

Der Erfindung liegt die Aufgabe zugrunde, eine Aufbereitungsanlage für Schwarzwasser aus Bordtoiletten bereitzustellen, die einen solchen wirtschaftlicheren Betrieb von Fahrzeugen mit Bordtoiletten ermöglicht.

Diese Aufgabe wird erfindungsgemäß durch eine Wasseraufbereitungs- und Speichervorrichtung nach Anspruch 1 gelöst.

Mit der erfindungsgemäßen Wasseraufbereitungsvorrichtung wird eine sehr kompakt bauende Anlage bereitgestellt, die sich hervorragend für den Einsatz an Bord von Fahrzeugen eignet. Die Vorrichtung nimmt wenig Bauraum ein und weist ein geringes Gewicht auf. Zudem ist die Vorrichtung kostengünstig herstellbar und eignet sich daher für eine dezentrale Platzierung in mehrfacher Ausführung. Erfindungsgemäß sind in der erfindungsgemäßen Vorrichtung zwei unterschiedliche Kreisläufe ausgebildet. Beide Kreisläufe nutzen gemeinsam den Antischaumtank, indem der bei der Wasseraufbereitung entstehende Schaum gebrochen wird und hierdurch der Prozess der oxidativen Abwasserreinigung ermöglicht wird. Die Verschaltung zwischen dem Zerkleinerungskreislauf und dem Oxidationskreislauf erfolgt durch eine erste Ventilanordnung. Dabei Ist zu verstehen, dass die erste Ventilanordnung durch ein oder mehrere Ventile mit einfacher Verschlussfunktion ausgebildet sein kann, die an unterschiedlichen Orten innerhalb der Aufbereitungsanlage installiert sein können oder die erste Ventilanordnung durch ein einziges Ventil mit einer Mehrwegefunktion ausgebildet sein kann. Insbesondere kann auch durch eine entsprechende Ansteuerung einer Pumpe oder einer Mehrzahl von Pumpen, welche für die Zirkulation in den beiden Kreisläufen sorgen, eine entsprechende Leitung des aufzubereitenden Schwarzwassers in dem einen bzw. dem anderen Kreislauf erfolgen. Grundsätzlich ist es zu verstehen, dass die beiden Kreisläufe in der erfindungsgemäßen Vorrichtung nicht zur gleichen Zeit mit dem Schwarzwasser durchströmt werden sollten, um eine sinnvolle Aufbereitung des Schwarzwassers zu gewährleisten. Vielmehr dienen die beiden Kreisläufe dazu, das aufzubereitende Schwarzwasser zunächst im Zerkleinerungskreislauf zu zerkleinern, wobei in diesem Prozess ein definiertes Volumen mehrfach im Zerkleinerungskreislauf zirkuliert wird und hierbei darin enthaltene Grobstoffe zerkleinert werden. Das Volumen befindet sich dabei im wesentlichen innerhalb des Antischaumtanks. Durch nachfolgendes Umschalten der ersten Ventilanordnung kann dieses solcher Art vorbereitete und nur noch mit Partikeln kleinerer Größe vermengte Schwarzwasser im Oxidationskreislauf durch eine Oxidationsbehandlung aufbereitet werden und hierdurch in eine Qualität gebracht werden, die zumindest Grauwasser entspricht.

Nach der oxidativen Reinigung im Oxidationskreislauf kann das solche Art hergestellte Grauwasser durch entsprechendes Umschalten der zweiten Ventilanordnung aus dem Kreislauf entfernt werden, um hierdurch die Möglichkeit zu schaffen, einen nachfolgenden Aufbereitungszyklus mit einem neuen Volumen von Schwarzwasser zu starten. Die zweite Ventilanordnung kann als wiederum einzelne Ventilanordnung mit einfachen Verschlussventilen oder Mehrwegventilen ausgeführt sein. Zudem kann die zweite Ventilanordnung auch in Funktionseinheit mit der ersten Ventilanordnung durch ein einziges Mehrwegventil bereitgestellt werden, welches durch entsprechende Schaltstellungen die Funktionsstellungen der ersten und zweiten Ventilanordnungen bereitstellt. Das Grauwasser kann dann einerseits einem Speichertank zugeführt werden und hierin zwischengespeichert werden, um nachfolgend als Spülwasser für die Bordtoilette genutzt zu werden. Alternativ oder ergänzend hierzu können Teile des Grauwassers oder das gesamte Grauwasser auch in die Umgebung abgegeben werden, da das aufbereitete Grauwasser eine Qualität aufweist, die dies, ohne schädliche Umwelteinwirkungen hervorzurufen, zulässt.

Erfindungsgemäß ist vorgesehen, dass der Antischaumtank
- In zumindest einem Schaumabschnitt in einem in Betriebsstellung horizontalen Querschnitt rund ausgebildet ist,
- eine untere Einlassöffnung hat, die vorzugsweise im unteren Bereich des Antischaumtanks in einer solchen Höhe angeordnet ist, dass sie auch bei 50% Füllhöhe des Antischaumtanks unterhalb des Füllstandspegels liegt und
- eine oberhalb der unteren Einlassöffnung liegende obere Einlassöffnung hat, deren Einströmrichtung solcherart zur Behälterwand ausgerichtet ist, dass durch sie hindurchströmende Flüssigkeit entlang der inneren Wandung des Antischaumtanks spiralförmig abwärts läuft.

Mit dieser Ausgestaltung wird einerseits ein sehr kompakter Aufbau des Antischaumtanks bereitgestellt, andererseits eine besonders effiziente Brechung des Schaums innerhalb des Antischaumtanks erzielt. Der Antischaumtank kann dabei einerseits durch die untere Einlassöffnung mit geringem Strömungswiederstand befüllt werden, andererseits der im Schwarzwasser befindliche Schaum durch die Einleitung des Schwarzwassers durch die obere Einlassöffnung innerhalb des Antischaumtanks wirksam gebrochen werden. Dabei ist zu verstehen, dass obere und untere Einlassöffnung gleichzeitig zur Befüllung des Antischaumtanks genutzt werden können, um kontinuierlich Abwasser in großen Mengen einzuführen und gleichzeitig dabei eingeführten Schaum zu brechen. Besonders bevorzugt ist es jedoch, wenn das Schwarzwasser wechselweise durch die untere und die obere Einlassöffnung in den Antischaumtank eingeführt wird.

Grundsätzlich ist zu verstehen, dass bei der erfindungsgemäßen Aufbereitungsvorrichtung eine schwerkraftbedingte Durchströmung erfolgen kann, vorzugsweise aber eine Umwälzvorrichtung zur Zirkulation des Abwassers im Oxidationskreislauf und/oder im Zerkleinerungskreislauf eine Förderpumpe vorhanden ist, welche das Schwarzwasser in dem einen und/oder dem anderen Kreislauf zirkulieren lässt. Die Umwälzvorrichtung kann als eine einzige, von beiden Kreisläufen genutzte Pumpe ausgeführt sein, Dabei ist es besonders bevorzugt, wenn die Umwälzvorrichtung solcherart in Strömungsrichtung vor oder hinter dem Antischaumtank angeordnet ist, dass sie zur Zirkulation des Abwassers im Oxidationskreislauf und im Zerkleinerungskreislauf dient.

Alternativ kann die Umwälzvorrichtung durch zwei separate Pumpen für jeden Kreislauf ausgeführt sein, von denen eine als Oxidationskreislauf-Zirkulationspumpe und die andere als Zerkleinerungskreislauf-Zirkulationspumpe dient.

Insbesondere kann vorzugsweise die Umwälzvorrichtung und die Zerkleinerungsvorrichtung durch einen zerkleinernden und pumpenden Mazerator gebildet werden. In diesem Fall bewirkt im Zerkleinerungskreislauf die Förderpumpe auch gleichzeitig eine Zerkleinerungsfunktion, wie dies beispielsweise durch einen Mazerator mit Pumpfunktion erreicht wird. Dabei ist zu verstehen, dass der Mazerator, ebenso wie die zuvor erläuterte separate Zerkleinerungskreislauf-Förderpumpe, nicht nur dazu dienen kann, um das Schwarzwasser im Zerkleinerungskreislauf zu zirkulieren, sondern auch, um das Schwarzwasser aus dem Abwassertank in den Zerkleinerungskreislauf zu fördern. In Kombination mit einer für beide Kreisläufe wirkenden einzelnen Pumpe bewirkt diese Ausführungsform, dass auch bei der Zirkulation im Oxidationskreislauf eine Zerkleinerungswirkung aufrechterhalten wird.

Weiter ist vorzugsweise vorgesehen, dass eine zweite Ventilanordnung, die eine erste Stellung, in der das Schwarzwasser im Oxidationskreislauf zirkulierend geleitet wird, und eine zweite Stellung aufweist, in der das Wasser aus dem Oxidationskreislauf abgeleitet wird. Hierdurch wird ein effizienter Parallelbetrieb der Wasseraufbereitungsvorrichtung ermöglicht.

Grundsätzlich ist es in weiterer Fortbildung bevorzugt, wenn in Strömungsrichtung vor und/oder unmittelbar benachbart zu der unteren Einlassöffnung ein die Strudelbildung im Antischaumtank vermindernder Leitungsabschnitt, vorzugsweise ein schräg oder rechtwinklig zur Einströmungsrichtung verlaufender Leitungsabschnitt, wie beispielsweise ein T-förmig, kreuzförmig oder Y-förmig verzweigender Leitungsabschnitt angeordnet ist. Ein besonderes Problem bei Antischaumtanks in erfindungsgemäßen Aufbereitungseinrichtungen liegt in der durch einen tangentialen Strömungseinlauf erzeugten Strudelbildung. Zwar kann durch eine tangentiale Einströmung ein Brechen des Schaums bewirkt werden, wenn aber innerhalb des Antischaumtanks eine Strudelbildung erfolgt, die insbesondere bei einem konstruktiv vorteilhaften, am tiefsten Punkt angeordneten Ablauf in einem im Querschnitt um eine vertikale Achse zylindrischen Antischaumtank auftreten kann, so wird durch diese Strudelbildung eine erhebliche Menge an Luft in das abgeführte Wasser eingebracht, was sich auf den Prozess nachteilig auswirkt. Diesem Nachteil kann durch die vorgenannte Fortbildung begegnet werden. Durch die Ausbildung eines die Strudelbildung vermindernden Einlaufs wird der Effekt verhindert oder zumindest verringert, dass in einem solchen Strudel Luft in den Auslauf eintritt und somit in die aufzubereitenden Flüssigkeit eingeschlossen wird und als Schaum auftritt bzw. die Schaumbildung beschleunigt.

Insbesondere kann die obere Einlassöffnung im Schaumabschnitt des Antischaumtanks in einer solchen Höhe angeordnet sein, dass sie bei 50% Füllhöhe des Antischaumtanks oberhalb des Füllstandspegels liegt.

Weiter ist es bevorzugt, wenn der Antischaumtank eine Ablassöffnung aufweist, die am tiefsten Punkt des Antischaumtanks angeordnet ist, da sich an dem tiefsten Punkt erfahrungsgemäß am wenigsten Schaum befindet.

Die obere Einlassöffnung ist hierbei solcher Art ausgerichtet, dass sie einer tangentiale oder etwa tangentiale Einströmung in das Innere des Antischaumtanks bewirkt. Dies kann durch entsprechende Ausgestaltung der Einlassöffnung oder einer außerhalb oder innerhalb der Behälterwand des Antischaumtanks liegenden Kanalführung für das Schwarzwasser bewirkt werden. Entscheidend für die Brechung des Schaums innerhalb des Antischaumtanks ist die entlang der Behälterinnenwand spiralförmig abwärts gerichtete Strömung des solcher Art durch obere Einlassöffnung eingeleiteten Schwarzwassers, was durch Mitreißen fester und flüssiger Bestandteile innerhalb des Schaums wie Gase freisetzt, die solcher Art beigesetzten Gase können dann über eine obere Gasabführungsöffnung aus dem Antischaumtank herausgeleitet werden, beispielsweise mittels entsprechender Ventilatoren. Die erfindungsgemäße Aufbereitungsvorrichtung kann weiter fortgebildet werden durch eine dritte Ventilvorrichtung, vorzugsweise ein Dreiwegeventil, welche in einer ersten Ventilstellung das im Oxidationskreislauf zirkulierende Wasser der unteren Einlassöffnung des Antischaumtanks zuführt und in einer zweiten Ventilstellung das im Oxidationskreislauf zirkulierende Wasser der oberen Einlassöffnung des Antischaumtanks zuführt. Mit der solchen Art fortgebildeten Vorrichtung kann das Wasser wechselweise der unteren und der oberen Einlassöffnung des Antischaumtanks zugeführt werden und hierdurch einerseits eine Zufuhr des Schwarzwassers mit geringem Durchflusswiderstand und andererseits eine Brechung des Schaums innerhalb des Antischaumtanks bewirkt werden.

Dabei ist es weiterhin bevorzugt, wenn die erfindungsgemäße Vorrichtung fortgebildet wird durch eine Steuerungsvorrichtung, welche ausgebildet ist, um in zyklischen Zeitabständen die dritte Ventilvorrichtung zwischen der ersten und der zweiten Ventilstellung hin- und herzuschalten, vorzugsweise solcherart, dass
- die dritte Ventilvorrichtung für die Dauer eines ersten Zeitintervalls in der ersten Ventilstellung ist,
- nach Ablauf des ersten Zeitintervalls in die zweite Ventilstellung geschaltet,
- für die Dauer eines zweiten Zeitintervalls in der zweiten Stellung bleibt, und
- nach Ablauf des zweiten Zeitintervalls wieder in die erste Ventilstellung geschaltet wird, woraufhin der Zyklus von neuem startet

Mit dieser Fortbildung kann eine für den Betrieb des Oxidationskreislaufes optimale Umschaltung zwischen der Zufuhr durch die untere und durch die obere Einlassöffnung erzielt werden und hierdurch eine besonders rasche oxidative Reinigung des Abwassers bei gleichzeitig möglichst kompaktem Aufbau des Reaktorbehälters und des Antischaumtanks erzielt werden. So kann eine optimale Balance zwischen der Einströmung durch den unteren Einlass, bei der Schaum in den Antischaumtank hineingefördert wird oder eine Schaumbildung innerhalb des Antischaumtanks erfolgt und einer Einströmung durch den oberen Einlass erzielt werden, welche den Schaum innerhalb des Antischaumtanks aufgrund der tangential an der Behälterinnenwand verlaufenden Wassers bricht und somit reduziert, bei längerer Zuströmung aber eine Strudelbildung innerhalb des Antischaumtanks bewirken würde, die dann Schaum in das aus dem Tank abfließende Wasser einbinden würde. Dabei ist zu verstehen, dass die Dauer des ersten und/oder des zweiten Zeitintervalls einerseits fest vorbestimmt sein kann, andererseits auch in Abhängigkeit anderer Prozessgrößen während des Zirkulierens des Schwarzwassers im Oxidationskreislauf verändert, insbesondere gesteuert oder geregelt werden kann.

Das erste Zeitintervall kann dabei vozugsweise langer als das zweite Zeitintervall sein, insbesondere um den Faktor 2 länger. Grundsätzlich ist es für eine effektive Reinigung des Abwassers wünschenswert, die zweite Stellung der Ventilvorrichtung, in welcher der Antischaumtank und der Reaktorbehälter durchströmt werden, mit möglichst großen Zeitanteilen zyklisch zu durchströmen. Allerdings ist vom Erfinder erkannt worden, dass diese Durchströmung des Reaktorbehälters und die darin stattfindende Oxidation im Wesentlichen ursächlich für die Schaumbildung ist und zuviel Schaum im Kreislauf die tatsächliche Reinigungswirkung verhindern oder zumindest reduzieren kann. Die Schaumbildung im Reaktor kann insbesondere den Schaumabbau im Antischaumtank übersteigen. Daher ist eine zeitliche Beschränkung der zweiten Ventilstellung erforderlich, um durch intervallmäßiges Einstellen der ersten Ventilstellung und dann Vermeidung des Durchlaufs des Reaktorbehälters den Schaum abzubauen. In bestimmten Anwendungsfällen, bei großer Schaumbildungsrate kann das erste Zeitintervall auch gleich dem zweiten zeitintervall sein oder bei besonders großer Schaumbildungsrate ist es auch vorteilhaft, wenn das erste Zeitintervall kürzer als das zweite Zeitintervall ist, um im Prozess gebildeten Schaum regelmäßig abzubauen und die Gresamtschaumbildung zu begrenzen.

Weiterhin ist es bevorzugt, wenn der Reaktorbehälter eine Mehrzahl von Elektroden beinhaltet, die mit einer Stromquelle verbunden sind, um durch elektrolytische Zersetzung des im Reaktorbehälter im Kontakt mit den Elektroden befindlichen Wassers eine oxidative Behandlung des Wassers zu bewirken. Durch eine solche Ausgestaltung des Reaktorbehälters wird eine besonders effiziente oxidative Reinigung bewirkt, indem durch elektrolytische Zersetzung des Schwarzwassers oxidativ wirkende Bestandteile freigesetzt werden, die zur Abwasserreinigung wirksam sind. Dabei können die Elektroden insbesondere als Flächen, Gitter oder Drahtelektroden ausgeführt sein und einerseits mit alternierender Polung nebeneinander angeordnet sein oder um eine zentral angeordnete Mittelelektrode mit einer Polung mehrere Elektroden mit anderer Polung herum angeordnet sein. Insbesondere kann auch die Behalterwand des Reaktorbehälters selbst als Elektrode genutzt werden.

Dabei ist es bei einer solchen Ausgestaltung des Reaktors und der Bereitstellung einer Steuerungsvorrichtung der zuvor beschriebenen Weise insbesondere bevorzugt, wenn die Steuerungsvorrichtung ausgebildet ist, um die Frequenz des Umschaltens der dritten Ventilvorrichtung zwischen der Zufuhr des Abwassers durch die obere und untere Einlassöffnung und/oder die Dauer des ersten und/oder des zweiten Zeitintervalls in Abhängigkeit der Stärke des zwischen den Elektroden fließenden Stromes und/oder eines Schaumpegels im Antischaumtank gewählt wird, insbesondere die Frequenz und/oder das Verhältnis zwischen dem erstem zu zweitem Zeitintervall bei einer hohen Stromstärke höher gewählt wird als bei einer kleineren Stromstärke. Diese Fortbildung beruht auf der Erkenntnis, dass die Stärke der Schaumbildung pro Zeiteinheit von der Stromstärke innerhalb eines Reaktors mit elektrolytischer Wirkung abhängt. Folglich kann die Einstellung der ersten und zweiten Zeitintervalle insbesondere in Abhängigkeit von der Stromstärke innerhalb des Reaktors erfolgen. Hierbei ist zu verstehen, dass dies einerseits in Form einer Steuerung erfolgen kann, indem bei dem Anlegen einer bestimmten Spannung und einer hieraus resultierenden Stromstärke eine vorbestimmte erste Umschaltfrequenz oder ein vorbestimmtes erstes Zeitintervall und/oder zweites Zeitintervall von der Steuerung realisiert wird und eine andere vorbestimmte Umschaltfrequenz und/oder ein anderes vorbestimmtes erstes und/oder zweites Zeitintervall realisiert wird, wenn eine andere Spannung bzw. Stromstärke an die Elektroden angelegt wird. Die Umschaltfrequenz ist umso höher zu wählen, d.h. es ist pro Zeiteinheit umso häufiger zwischen oberem und unterem Einlass umzuschalten, je höher die Stromstärke im Reaktor und damit die Schaumbildung im Oxidationskreislauf ist. In anderer Weise ist auch eine Regelung umsetzbar, bei der die Stärke des tatsächlich über die Elektroden fließenden Stroms gemessen wird und die bei dieser Stromstärke sinnvolle Umschaltfrequenz bzw. ersten bzw. zweiten Zeitintervalle aus einer Tabelle abgelesen oder mittels eines Algorithmus ermittelt und dann entsprechend von der Steuerung umgesetzt werden.

Zum Zwecke der Steuerung der Frequenz des Umschaltens kann die Steuerungsvorrichtung insbesondere signaltechnisch mit einem Schaumpegelsensor im Antischaumtank verbunden sein, um von diesem Sensor ein den Schaumpegel charakterisierendes Eingangssignal zu erhalten und auf Grundlage dieses Eingangssignal die Umschaltung oder die Frequenz der Umschaltung zu steuern.

Weiterhin ist es bevorzugt, wenn die Steuerungsvorrichtung ausgebildet ist um eine Dosiereinheit anzusteuern, welche mit einem Reservoir für ein Entschäummittel in Verbindung steht und dieses Entschäummittel in dosierten Mengen dem Antischaumtank zuführt.

Noch weiter ist es bevorzugt, dass die erste Ventilvorrichtung ein Dreiwegeventil ist, das in einer ersten Ventilstellung die Auslassöffnung des Abwassertanks mit dem Zerkleinerungskreislauf verbindet und in einer zweiten Ventilstellung die Verbindung zwischen dem Zerkleinerungskreislaufs und der Auslassöffnung des Abwassertanks unterbricht und einen geschlossenen Zirkulationskreislauf herstellt. Mit dieser Fortbildung wird eine kompakte Ausgestaltung der ersten Ventilvorrichtung bereitgestellt, die in einfacher Weise einerseits die Befüllung des Zerkleinerungskreislaufes aus dem Abwassertank und andererseits die Zirkulation des Schwarzwassers innerhalb des Zerkleinerungskreislaufes ermöglicht. Dabei ist zu verstehen, dass das Dreiwegeventil weitere Ventilstellungen aufweisen können, die für die Funktion der erfindungsgemäßen Vorrichtung erforderlich oder vorteilhaft sind.

Noch weiter ist es bevorzugt, wenn die Vorrichtung fortgebildet wird durch eine vierte Ventilvorrichtung, welche ausgebildet ist, um in einer ersten Ventilstellung das im Oxidationskreislauf gereinigte Wasser einem Puffertank oder einer Entsorgungsöffnung zuzuführen und in einer zweiten Ventilstellung die Verbindung zwischen dem Oxidationskreislaufs und dem Puffertank bzw. der Entsorgungsöffnung zu unterbrechen und einen geschlossenen Oxidationskreislauf herzustellen. Mit dieser Fortbildung kann das Schwarzwasser, nachdem es im Oxidationskreislauf gereinigt und zu Grauwasser aufbereitet wurde, aus dem Oxidationskreislauf abgeführt werden, um beispielsweise in einem Puffertank vorgehalten zu werden und nachfolgend als Grauwasser zur Spülung der Bordtoilette eingesetzt zu werden oder um über eine Entsorgungsöffnung in die Umgebung abgegeben zu werden. Dabei ist zu verstehen, dass die vierte Ventilvorrichtung gegebenenfalls in Baueinheit mit einer der anderen Ventilvorrichtungen ausgeführt sein kann, indem entsprechende Funktionsstellungen an einem Mehrwegeventil bereitgestellt werden.

Noch weiter ist es bevorzugt, die erfindungsgemäße Vorrichtung oder die eingangs beschriebene Vorrichtung fortzubilden, indem der Abwassertank in eine erste und eine zweite Kammer unterteilt ist, die mittels eines Überlaufs miteinander verbunden sind, der mittels einer Siebvorrichtung, wie einem Rechen, Feststoffe oder Fremdkörper oberhalb einer bestimmten Größe daran hindert, aus der ersten Kammer in die zweite Kammer zu gelangen. Diese Siebvorrichtung kann insbesondere unterhalb des Wasserpegels bei normaler Füllhöhe des Abwassertanks liegen und durch eine oberhalb der Siebvorrichtung angeordnete Sperrwand ergänzt werden, welche Schwimmstoffe am Übertritt von der ersten in die zweite Kammer hindert.

Dabei ist es bevorzugt, dass die Zuleitungsöffnung in die erste Kammer mündet, die Ableitungsöffnung in den zweite Kammer mündet und/oder dass vorzugsweise die erste und die zweite Kammer im unteren Bereich Düsen zur Lufteinblasung aufweisen, und/oder dass weiter vorzugsweise eine Steuereinrichtung bereitgestellt ist, welche die Luftdüsen in der ersten Kammer kontinuierlich und die Luftdüsen in der zweiten Kammer diskontinuierlich ansteuert.

Mit dieser Ausgestaltung wird ein Abwassertank in zweiteiliger Ausgestaltung bereitgestellt, der einerseits dazu dient, eine bestimmte Menge an Schwarzwasser vor dessen Aufbereitung zwischenspeichern zu können, andererseits bereits Feststoffe größerer Abmessungen, wie beispielsweise Fremdkörper bereits zurückzuhalten, die aus der ersten Kammer des Abwassertanks entsorgt werden können. Dabei ist zu verstehen, dass sowohl die erste wie auch die zweite Kammer hinsichtlich ihres Follungsstands mittels entsprechend angeordneter Füllstandssensoren überwacht werden können, um den nachfolgenden Reinigungs- und Aufbereitungsprozess in Abhängigkeit von dem Füllstand der beiden Kammern steuern zu können und um andererseits etwaige Verstopfungen des Überlaufs zwischen erster und zweiter Kammer detektieren zu können. Hierzu kann insbesondere jeweils ein Pegelsensor in den beiden Kammern vorgesehen sein, der 90% der Füllung anzeigt und ein Pegelsensor vorhanden sein, der eine solche Füllmenge in Kammer 2 anzeigt, welche dafür ausreichend ist, um den Zerkleinerungskreislauf und insbesondere den darin enthaltenen Antischaumtank befüllen zu können.

Ein weiterer Aspekt der Erfindung ist eine Bordtoilette für ein Fahrzeug, die durch eine Schwarzwasseraufbereitungs- und Speichervorrichtung der zuvor beschriebenen Bauweise gekennzeichnet ist. Die Schwarzwasseraufbereitungs- und Speichervorrichtung kann hierbei insbesondere solcher Art mit der Bordtoilette verbunden sein, dass das aus der Bordtoilette abgeleitete Schwarzwasser in den Abwassertank eingeleitet wird und dass aus dem Oxidationskreislauf abgeleitete Grauwasser zwischengespeichert wird, um als Spülwasser für die Bordtoilette eingesetzt zu werden. Alternativ zu dieser Nutzung kann das Grauwasser auch unmittelbar entsorgt werden, wodurch eine Bordtollette bereitgestellt wird, die insgesamt ein geringes Speichervolumen für das Abwasser benötigt.

Ein weiterer Aspekt der Erfindung ist ein Verfahren nach Anspruch 12. Mit diesem erfindungsgemäßen Verfahren wird eine besonders effiziente und auf kompaktem Bauraum durchführbare Schwarzwasseraufbereitung ermöglicht, die sich dafür eignet, das Schwarzwasser in einen solchen Reinigungszustand zu versetzen, dass es als Grauwasser zur Spülung einer Bordtoilette eines Fahrzeugs eingesetzt werden kann. Dabei ist zu verstehen, dass der Reinigungsgrad des aufbereiteten Wassers weiter gesteigert werden kann, in dem die Prozessverweildauer innerhalb des Verfahrens erhöht wird und/oder Reinigungszusätze zugesetzt werden.

Das Verfahren kann fortgebildet werden, in dem die Reinigung in einem Zyklus abläuft, umfassend:
- Zuführen des Schwarzwassers aus einem Abwassertank in den Zerkleinerungskreislauf,
- Zerkleinern der Grobbestandteile durch Zirkulieren des Schwarzwassers im Zerkleinerungskreislauf für eine erste Zeitdauer,
- Umschalten einer Ventilvorrichtung, um den Antischaumtank aus dem Zerkleinerungskreislauf in den Oxidationskreislauf zu schalten und
- Oxidationsbehandeln und Entschäumen des Schwarzwassers im Oxidationskreislauf,
- Abführen des durch die Oxidationsbehandlung des Schwarzwassers erzeugten Grauwassers in einen Puffertank oder zu einer Entsorgungsöffnung.

Durch diese Abfolge von Verfahrensschritten wird eine wirksame Vorbereitung und Durchführung der Oxidationsbehandlung des Schwarzwassers in einem abgeschlossenen Verfahrenskreislauf erzielt, wobei dieser Verfahrenskreislauf als Zyklus immer wiederkehrend wiederholt werden kann, um kurz aufeinanderfolgend jeweils ein bestimmtes Volumen eines Schwarzwassers aufzubereiten.

Das Verfahren kann weiter fortgebildet werden durch die Schritte
- Zuführen des im Oxidationskreislauf zirkulierende Wassers zu einer unteren Einlassöffnung des Antischaumtanks für die Dauer eines ersten Zeitintervalls
- Zuführen des im Oxidationskreislauf zirkulierenden Wassers zu einer oberen Einlassöffnung des Antischaumtanks für die Dauer eines zweiten Zeitintervalls, solcherart, dass das Wasser solcherart tangential in den Antischaumtank eingeleitet wird, dass es an einer in einem horizontalen Querschnitt rund ausgebildeten Innenfläche spiralförmig nach unten entlanglauft und hierdurch den Schaum innerhalb des Antischaumtanks bricht,
- wobei das erste Zeitintervall länger als das zweite Zeitintervall ist, vorzugsweise um den Faktor 5 bis 15 länger.

Dabei ist es besonders bevorzugt, wenn das Abwasser im Oxidationskreislauf durch Anlegen einer Spannung an Elektroden innerhalb des Oxidationsreaktors oxidationsbehandelt wird und die Frequenz des Umschaltens zwischen der Zufuhr des Abwassers durch die obere und untere Einlassöffnung und/oder die Dauer des ersten und/oder des zweiten Zeitintervalls in Abhängigkeit der Stärke zwischen den Elektroden fließenden Stromes gewählt wird, insbesondere die Frequenz oder das Verhältnis zwischen dem erstem zu zweitem Zeitintervall bei einer hohen Stromstärke höher gewählt wird als bei einer kleineren Stromstärke.

Schließlich ist gemäß eines weiteren Fortbildung des Verfahrens vorgesehen, dass das Schwarzwasser vor dem Zerkleinern einer ersten Kammer eines Abwasserbehälters zugeführt wird, das Absinken von Schwebstoffen innerhalb dieser ersten Kammer durch, vorzugsweise kontinuierliches, Einblasen von Luft im unteren Bereich der ersten Kammer verhindert wird und das Schwarzwasser über einen Überlauf aus der ersten Kammer in eine zweite Kammer des Abwasserbehälters geführt und hierbei Feststoffe oberhalb einer bestimmten Größe in der ersten Kammer zurückgehalten werden und das Schwarzwasser aus der zweiten Kammer einer Zerkleinerungsvorrichtung zum Zerkleinem von Grobbestandteilen im Schwarzwasser zugeführt wird, wobei Schwebstoffe innerhalb des Schwarzwasser in der zweiten Kammer durch, vorzugsweise periodisches, Einblasen von Luft im unteren Bereich der zweiten Kammer aufgewirbelt werden.

Eine bevorzugte Ausführungsform der Erfindung wird anhand der beiliegenden Figuren beschrieben. Es zeigen:
Fig. 1 eine schematische Anordnung der einzelnen Komponenten und ihre Verbindung untereinander der erfindungsgemäßen Schwarzwasseraufbereitungsanlage zeigt, und
Fig. 2 ein schematisches Ablaufdiagramm des Reinigungsverfahrens.

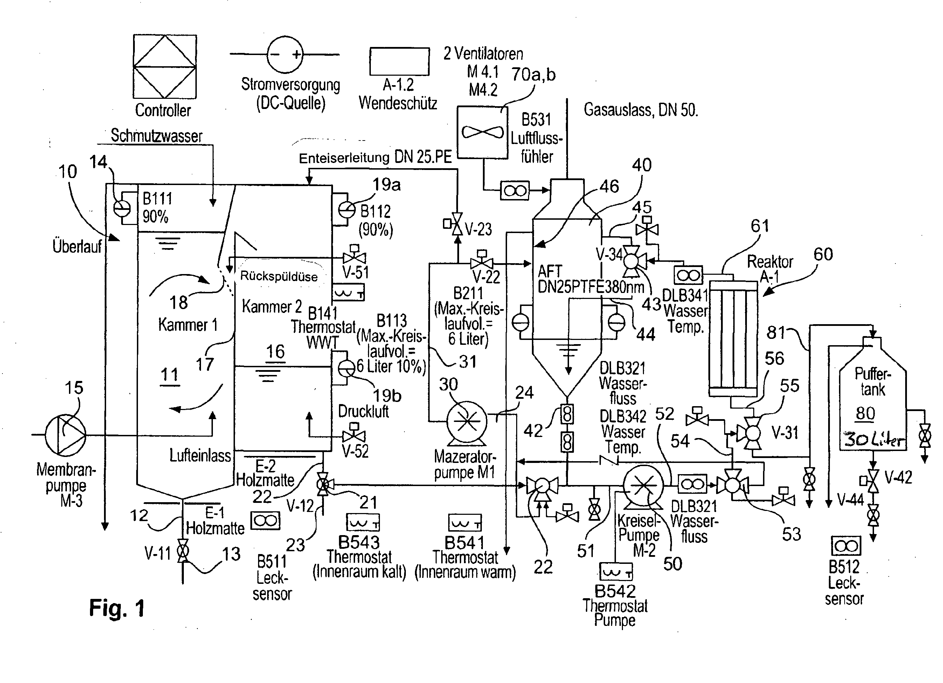

In Figur 1 ist ein Abwassertank 10 dargestellt, in den von oben Schwarzwasser in eine linke Kammer 11 eingefüllt wird. Die linke Kammer 11 ist im Bodenbereich konisch zusammenlaufend ausgebildet und weist an ihrem tiefsten Punkt eine Öffnung mit Drainageventil 12 auf. Im oberen Bereich der ersten Kammer 11 ist ein 90%-Füllstandssensor angeordnet.

Eine Membranpumpe 15 fördert kontinuierlich Luft in den unteren Bereich der ersten Kammer 11 und lässt diese dort über eine Mehrzahl von Düsen ausströmen, was eine konstante Zirkulation des Schwarzwassers in der ersten Kammer 11 bewirkt und folglich das Absetzen von Sedimenten verhindert.

Eine zweite Kammer 16 ist neben der ersten Kammer 11 des Abwassertanks 10 angeordnet und von dieser ersten Kammer über eine Zwischenwand 17 abgetrennt. Die Zwischenwand 17 erstreckt sich von dem Bodenbereich der zweiten Kammer bis auf eine Höhe, die knapp unterhalb des 90%-Füllstandspegels liegt. Oberhalb der Trennwand 17 ist ein Überlauf angeordnet, der mittels eines Rechens 18 gegen Feststoffe oberhalb einer bestimmten Größe gesperrt ist. Schwarzwasser und Feststoffe unterhalb der bestimmten Größe können von der ersten Kammer durch den Rechen in die zweite Kammer gelangen.

Die zweite Kammer ist ebenfalls mit einem 90%-Füllstandssensor 19a ausgerüstet und weist weiterhin ein 6 Liter-Füllstandssensor 19b auf, der das Vorhandensein von 6 Litern oder mehr in der zweiten Kammer detektieren kann.

Aus einer unteren Auslassöffnung kann das in der zweiten Kammer befindliche Schwarzwasser über ein erstes Dreiwegeventil 21 einem zweiten Dreiwegeventil 22 zugeführt werden.

Das erste Dreiwegeventil 21 dient dazu, die zweite Kammer vollständig über eine Drainageleitung 23 zu entleeren, beispielsweise zwecks Frostentleerung. Das zweite Dreiwegeventil 22 kann, wenn das erste Dreiwegeventil 21 solcher Art geschaltet ist, dass ein Fluss aus der zweiten Kammer zum zweiten Zweiwegeventil 22 geschaltet ist, solcher Art geschaltet werden, dass eine Mazeratorpumpe 30 Schwarzwasser aus der zweiten Kammer in einen Antischaumtank 40 befördert.

Der Antischaumtank ist als aufrechtstehender zylindrischer Behälter mit konisch zusammenlaufendem unterem Ende ausgebildet. Am unteren Ende des Antischaumtanks 40 ist am tiefsten Punkt eine Ableitung ausgebildet, die in eine Leitung 42 mündet. Die Leitung 42 ist an ihrem linken Ende mit dem Dreiwegeventil 22 verbunden und an ihrem rechten Ende mit einer Umwälzpumpe 50 verbunden.

Zur Befüllung des Antischaumtanks saugt die Mazeratorpumpe 30 das Schwarzwasser, aus der Kammer 2 über die Dreiwegeventile 23, 21, 22, die daran anschließende Leitung 24 vom Dreiwegeventil 22 zur Mazeratorpumpe und fördert dieses Schwarzwasser weiter über eine Leitung 31 von der Mazeratorpumpe in eine Zuflussöffnung des Antischaumtanks 40. Die Mazeratorpumpe pumpt maximal 6 Liter aus der zweiten Kammer in den Antischaumtank 40. Hierauf folgend wird das Dreiwegeventil 22 solcher Art geschaltet, dass das aus der Ablaufleitung 42 des Antischaumtanks strömende Schwarzwasser über das Dreiwegeventil 22 wiederum in die Leitung 24 strömen kann und dort mittels der Mazeratorpumpe wiederum über die Leitung 31 und die Öffnung in den Antischaumtank 40 hineingefördert wird. Die Leitungen 42, 24, 31 bilden hierbei mit der Mazeratorpumpe 30 und dem Antischaumtank 40 den Zerkleinerungskreislauf, in dem das Schwarzwasser solange zirkuliert wird, bis alle in den 6 Litern des Kreislaufvolumens enthaltenen Grobpartikeln durch die Mazeratorpumpe soweit zerkleinert sind, dass sie einer oxidativen Aufbereitungsbehandlung zugeführt werden können.

Soll die oxidative Aufbereitungsbehandlung durchgeführt werden, so wird das Dreiwegeventil 22 solcher Art geschaltet, dass das Wasser aus der Leitung 42 vom Zufluss in die Leitung 24 und zum Dreiwegeventil 21 abgesperrt wird. Die Zirkulationspumpe 50 fördert das aus dem Antischaumtank am unteren Ende austretende Schwarzwasser aus der Leitung 42 in eine zur Umwälzpumpe 50 führende Leitung 51, über eine Leitung 52 zu einem Dreiwegeventil 53, von dort aus über eine weitere Leitung 54 zu einem Dreiwegeventil 55 und von dort über eine Leitung 56 in einen Oxidationsreaktor 60.

Der Oxidationsreaktor 60 besteht aus einem im Querschnitt rechteckigen, sich in vertikaler Richtung erstreckenden Gehäuse, in dem mehrere plattenförmige Elektroden angeordnet sind, an die eine elektrische Spannung angelegt ist. Die Plattenelektroden sind solcher Art verschaltet, dass jeweils zwei entgegengesetzt gepolte Plattenelektroden zueinander benachbart sind und somit zwischen zwei solchen beachten Plattenelektroden ein starker elektrischer Storm in dem Schwarzwasser erzeugt wird, das durch den Oxidationsreaktor hindurchströmt. Das am unteren Ende aus der Leitung 56 in den Oxidationsreaktor 60 eintretende Schwarzwasser kann am oberen Ende in eine Leitung 61 aus dem Oxidationsreaktor 60 austreten und wird von dort zu einem Dreiwegeventil 43 geleitet. Das Dreiwegeventil 43 kann das Schwarzwasser einerseits in eine untere Einlassöffnung 44 des Antischaumtanks einleiten oder in einer anderen Ventilstellung in eine obere Einlassöffnung 45 in den Antischaumtank 40 einleiten. Die obere Öffnung 45 ist am oberen Ende des zylindrischen Bereichs des Antischaumtanks angeordnet und leitet das Schwarzwasser solcher Art in den Antischaumtank 40 ein, dass es tangential unter hohem Druck an die Innenwand anliegend einströmt. Das solcher Art einströmende Schwarzwasser strömt hierdurch spiralförmig abwärts an der Innenwand 46 des Antischaumtanks 40 entlang. Hierdurch wird Schaum, der sich innerhalb des Antischaumtanks in diesem Bereich gebildet hat, gebrochen und somit verhindert, dass dieser Schaum die Aufbereitung des Schwarzwassers im Oxidationsreaktor 60 hindert.

Die im Zuge der oxidativen Behandlung des Schwarzwassers im Oxidationsreaktor 60 auftretenden Gase werden, nachdem sie durch die Brechung des Schaums im Antischaumtank freigesetzt sind, über zwei in Reihe geschaltete Ventilatoren 70a,b (symbolisch durch einen Ventilator dargestellt) aus dem oberen Endbereich des Antischaumtanks 40 abgezogen und in die Umwelt abgeben.

Die Leitungen 42, 51, die Umwälzpumpe 50 und die nachfolgenden Leitungen 52, 54, 56, der Oxidationsreaktor 60, die weiteren Leitungen 61 und optional 44 oder 45 sowie der Antischaumtank 40 bilden den Oxidationskreislauf.

Nachdem das Schwarzwasser über einen Zeitraum von mehreren Minuten im Oxidationskreis zirkuliert und hierbei durch eine Oxidationsbehandlung gereinigt wurde, liegt Wasser mit Grauwasserqualität oder besser im Oxidationskreislauf vor. Zu diesem Zeitpunkt wird das Dreiwegeventil 55 solcher Art geschaltet, dass dieses Grauwasser aus dem Oxidationskreislauf mittels der Umwälzpumpe 50 herausgedrückt und über eine Leitung 81 in einen Puffertank 80 eingeleitet wird. Aus diesem Puffertank 80 kann das Grauwasser als Spülwasser für die Bordtoilette verwendet werden und fließt somit nach einer solchen entsprechenden Nutzung wieder als Schwarzwasser in die erste Kammer des Abwassertanks 10 hinein.

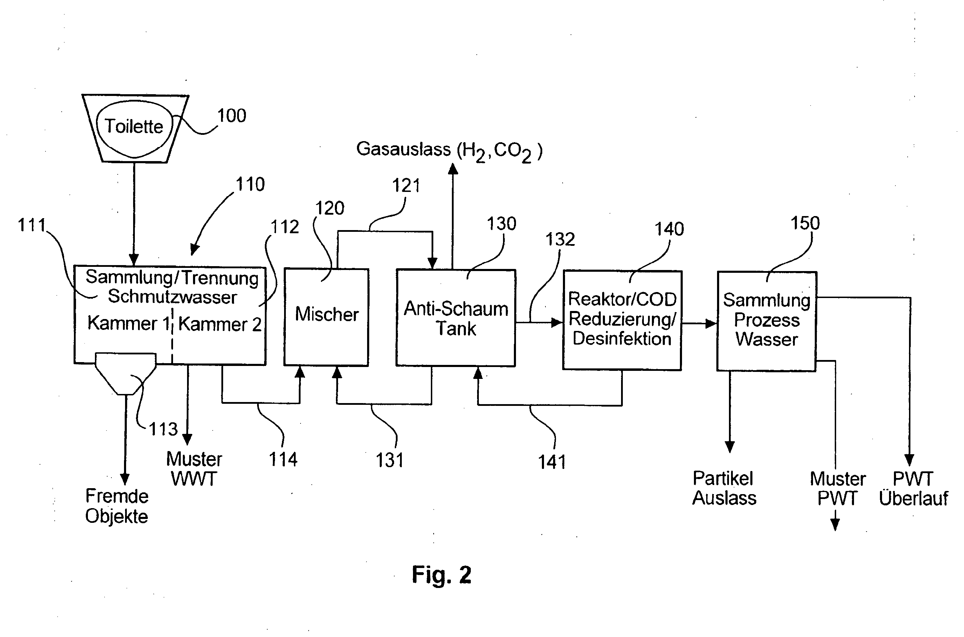

Figur 2 zeigt einen schematischen Ablauf des erfindungsgemäßen Schwarzwasseraufbereitungsverfahrens.

Aus einer Toilette 100 wird das Schwarzwasser einer ersten Kammer 111 eines Abwassertanks 110 zugeführt. Aus dieser ersten Kammer 111 kann das Wasser über einen Überlauf in eine zweite Kammer 112 strömen, wobei aufschwimmende Fremdkörper mittels eines Rechens in der ersten Kammer zurückgehalten werden und absinkende Feststoffe sich am Boden der ersten Kammer sammeln. Von hier aus werden die Fremdkörper über eine Entnahmeleitung 113 abgeführt.

Aus der zweiten Kammer wird das Schwarzwasser in periodischer Weise einem Mischvorgang 120 zugeführt, der durch einen Kreislauf 121 mit einem Antischaumtank 130 und einer Rückführleitung 131 über einen bestimmten Zeitraum ausgeführt wird.

Nachdem auf diese Weise die Feststoffe im Schwarzwasser ausreichend zerkleinert worden sind, wird der Zerkleinerungskreislauf 120, 121, 130, 131 gestoppt und das solcher Art zerkleinerte Schwarzwasservolumen einem Oxidationskreislauf zugeführt. Der Oxidationskreislauf wird wiederum durch den Antischaumtank 130, eine Leitung 132 zu einem Oxidationsreaktor 140, den Oxidationsreaktor 140 und eine Rückleitung 141 gebildet. Gase, die sich im Zuge der oxidativen Behandlung des Schwarzwassers im Oxidationskreislauf bilden, werden über eine Gasableitung 133 aus dem Antischaumtank abgeführt.

Das Schwarzwasser zirkuliert solange im Oxidationskreislauf 130, 132, 140, 141 bis es Grauwasserqualität erreicht hat. Sobald Grauwasserqualität erreicht ist, wird die Zirkulation im Oxidationskreislauf gestoppt und das Wasser einem Prozesswasserspeicher 150 zugeführt, wo es für verschiedene Zwecke, wie Überflussableitung, Probenentnahme oder als Spülwasser heraus entnommen werden kann.

## Patentansprüche

1. Wasseraufbereitungs- und Speichervorrichtung, inbesondere zur Aufbereitung von Schwarzwasser einer Bordtoilette an Bord eines Fahrzeugs, umfassend:
- einen Abwassertank (10) mit einer Zuleitungsöffnung zum Zulelten von Schwarzwasser in den Abwassertank und einer Ableitungsöffnung zum Ableiten von Schwarzwasser aus dem Abwassertank,
- eine Zerkleinerungsvorrichtung ((30) zur Zerkleinerung von Grobbestandteilen im Schwarzwasser,
- einen Reaktorbehälter (60) , der ausgebildet Ist, um darin das Schwarzwasser einer oxidativen Abwasserreinigung zu unterziehen,
- einen Antischaumtank (40), der ausgebildet ist, um Schaum, der bei der Abwasserreinlgung entsteht, zu reduzieren, wobei
- die Ableitungsöffnung des Abwassertanks (10) mit der Zerkleinerungsvorrichtung (30) über eine Abwasserleitung verbunden ist,
- die Abwasserleitung in einen Zerkleinerungskreislauf (31) mündet, in dem die Zerkleinerungsvorrichtung (30) und der Antischaumtank (40) angeordnet sind,
**dadurch gekennzeichnet, dass**
- eine erste Ventilanordnung (22) bereitgestellt ist, die eine erste Stellung, in der das Schwarzwasser im Zerkleinerungskreislauf (31) zirkulierend geleitet wird, und eine zweite Stellung aufweist, in der das Wasser in einem Oxidationskreislauf (42,51,50,52,54,56,60,61,44,45,40) zirkulierend geleitet wird,
- wobei in dem Oxidationskreislauf der Antischaumtank (40) und der Reaktorbehälter (60) angeordnet sind, und der Antischaumtank (40)
- In zumindest einem Schaumabschnitt in einem in Betriebsstellung horizontalen Querschnitt rund ausgebildet ist,
- eine untere Einlassöffnung (44) hat, die vorzugsweise im unteren Bereich des Antischaumtanks in einer solchen Höhe angeordnet ist, dass sie auch bei 50% Füllhöhe des Antischaumtanks unterhalb des Füllstandspegels liegt und
- eine oberhalb der unteren Einlassöffnung liegende obere Einlassöffnung (45) hat, deren Einströmrichtung solcherart zur Behälterwand ausgerichtet ist, dass durch sie hindurchströmende Flüssigkeit entlang der inneren Wandung des Antischaumtanks (40) spiralförmig abwärts läuft.

2. Vorrichtung nach Anspruch 1,
**gekennzeichnet durch** eine Umwälzvorrichtung zur Zirkulation des Abwassers im Oxidationskreislauf und/oder im Zerkleinerungskreislauf (31), wobei vorzugsweise die Umwälzvorrichtung solcherart in Strömungsrichtung vor oder hinter dem Antischaumtank angeordnet ist, dass sie zur Zirkulation des Abwassers im Oxidationskreislauf und im Zerkleinerungskreislauf dient, und/oder vorzugsweise die Umwälzvorrichtung und die Zerkleinerungsvorrichtung **durch** einen zerkleinernden und pumpenden Mazerator (30) gebildet werden.

3. Vorrichtung nach einem der vorhergehenden Ansprüche,
**gekennzeichnet durch**
- eine zweite Ventilanordnung (55), die eine erste Stellung, in der das Schwarzwasser im Oxidationskreislauf zirkulierend geleitet wird, und eine zweite Stellung aufweist, in der das Wasser aus dem Oxidationskreislauf abgeleitet wird.

4. Vorrichtung nach einem der vorhergehenden Ansprüche,
**dadurch gekennzeichnet, dass** in Strömungsrichtung vor und/oder unmittelbar benachbart zu der unteren Einlassöffnung ein die Strudelbildung im Antischaumtank vermindernder Leitungsabschnitt, vorzugsweise ein schräg oder rechtwinklig zur Einströmungsrichtung verlaufender Leitungsabschnitt, wie beispielsweise ein T-förmig, kreuzförmig oder Y-förmig verzweigender Leitungsbschnitt angeordnet ist und/oder
**dadurch gekennzeichnet, dass** die obere Einlassöffnung im Schaumabschnitt des Antischaumtanks in einer solchen Höhe angeordnet ist, dass sie bei 50% Füllhöhe des Antischaumtanks oberhalb des Füllstandspegels liegt.

5. Vorrichtung nach einem der vorhergehenden Ansprüche,
**gekennzeichnet durch** eine dritte Ventilvorrichtung (43), vorzugsweise ein Drelwegeventil, welche in einer ersten Ventilstellung das im Oxidationskreislauf zirkulierende Wasser der unteren Einlassöffnung des Antischaumtanks zuführt und in einer zweiten Ventilstellung das im Oxidationskreislauf zirkulierende Wasser der oberen Einlassöffnung des Antischaumtanks zuführt.

6. Vorrichtung nach dem vorhergehenden Anspruch,
**gekennzeichnet durch** eine Steuerungsvorrichtung, welche ausgebildet ist, um in zyklischen Zeitabständen die dritte Ventilvorrichtung (43) zwischen der ersten und der zweiten Ventilstellung hin- und herzuschalten, vorzugsweise solcherart, dass
- die dritte Ventilvorrichtung (43) für die Dauer eines ersten Zeitintervalls in der ersten Ventilstellung ist,
- nach Ablauf des ersten Zeitintervalls in die zweite Ventilstellung geschaltet,
- für die Dauer eines zweiten Zeitintervalls in der zweiten Stellung bleibt, und
- nach Ablauf des zweiten Zeitintervalls wieder in die erste Ventilstellung geschaltet wird, woraufhin der Zyklus von neuem startet.

7. Vorrichtung nach einem der vorhergehenden Ansprüche,
**dadurch gekennzeichnet, dass** der Reaktorbehälter (60) eine Mehrzahl von Elektroden beinhaltet, die mit einer Stromquelle verbunden sind, um durch elektrolytische Zersetzung des im Reaktorbehälter im Kontakt mit den Elektroden befindlichen Wassers eine oxidative Behandlung des Wassers zu bewirken.

8. Vorrichtung nach den vorhergehenden Ansprüchen 6 und 7,
**dadurch gekennzeichnet, dass** die Steuerungsvorrichtung ausgebildet ist, um die Frequenz des Umschaltens der dritten Ventilvorrichtung zwischen der Zufuhr des Abwassers durch die obere und untere Einlassöffnung oder die Dauer des ersten und/oder des zweiten Zeitintervalls in Abhängigkeit der Stärke zwischen den Elektroden fließenden Stromes und/oder eines vorzugsweise mittels eines mit der Steuerungsvorrichtung signaltechnisch gekoppelten Schaumpegelsensors erfassten Schaumpegels im Antischaumtank gewählt wird, insbesondere die Frequenz oder das Verhältnis zwischen dem erstem zu zweitem Zeltintervall bei einer hohen Stromstärke höher gewählt wird als bei einer kleineren Stromstärke.

9. Vorrichtung nach einem der vorhergehenden Ansprüche,
**dadurch gekennzeichnet, dass** die erste Ventilvorrichtung (22) ein Dreiwegeventil ist, das in einer ersten Ventilstellung die Auslassöffnung des Abwassertanks (10) mit dem Zerkleinerungskreislauf (31) verbindet und in einer zweiten Ventilstellung die Verbindung zwischen dem Zerkleinerungskreislaufs (31) und der Auslassöffnung des Abwassertanks (10) unterbricht und einen geschlossenen Zirkulationskreislauf herstellt und/oder
**gekennzeichnet durch** eine vierte Ventilvorrichtung (55), welche ausgebildet ist, um in einer ersten Ventilstellung das im Oxidationskreislauf gereinigte Wasser einem Puffertank (80) oder einer Entsorgungsöffnung zuzuführen und in einer zweiten Ventilstellung die Verbindung zwischen dem Oxidationskreislaufs und dem Puffertank bzw. der Entsorgungsöffnung zu unterbrechen und einen geschlossenen Oxidationskreislauf herzustellen.

10. Vorrichtung nach einem der vorhergehenden Ansprüche
**dadurch gekennzeichnet, dass** der Abwassertank (10) in eine erste (11) und eine zweite (16) Kammer unterteilt ist, die mittels eines Überlaufs miteinander verbunden sind, der mittels einer Siebvorrichtung (18), wie einem Rechen, Feststoffe oberhalb einer bestimmten Größe daran hindert, aus der ersten Kammer in die zweite Kammer zu gelangen,
dass die Zuleitungsöffnung in die erste Kammer (11) mündet, die Ableitungsöffnung in den zweite Kammer (16) mündet und
dass vorzugsweise die erste und die zweite Kammer im unteren Bereich Düsen zur Lufteinblasung aufweisen, und
dass weiter vorzugsweise eine Steuereinrichtung bereitgestellt ist, weiche die Luftdüsen in der ersten Kammer (11) kontinuierlich und die Luftdüsen in der zweiten Kammer (16) diskontinuierlich ansteuert.

11. Bordtoilette für ein Fahrzeug,
**gekennzeichnet durch** eine Schwarzwasseraufbereitungs- und Speichervorrichtung nach einem der vorhergehenden Ansprüche.

12. Verfahren zur Schwarzwasserreinigung insbesondere aus Toiletten in Fahrzeugen, mit den Schritten:
- Zerkleinern von Grobbestandteilen im Schwarzwasser.
- Oxidationsbehandeln des Schwarzwassers, und
- Entschäumen des Schwarzwassers während des Oxidationsbehandelns,
- **dadurch gekennzeichnet, dass** das Schwarzwasser während des Zerkleinerns in einem Zerkleinerungskreislauf (31) durch einen Zerkleinerer (30) und einen Antischaumtank (40) geführt wird und während des Oxidationsbehandelns in einem Oxidationskreislauf durch einen Oxidationsreaktor (60) und den Antischaumtank (40) geführt wird,
- Zuführen des im Oxidationskreislauf zirkulierenden Wassers zu einer unteren Einlassöffnung des Antischaumtanks (40) für die Dauer eines ersten Zeitintervalls
- Zuführen des im Oxidationskreislauf zirkulierenden Wassers zu einer oberen Einlassöffnung des Antischaumtanks (40) für die Dauer eines zweiten Zeitintervalls, solcherart, dass das Wasser solcherart tangential in den Antischaumtank (40) eingeleitet wird, dass es an einer in einem horizontalen Querschnitt rund ausgebildeten Innenfläche spiralförmig nach unten entlangläuft und hierdurch den Schaum innerhalb des Antischaumtanks bricht,
- wobei das erste Zeitintervall länger als das zweite Zeitintervall ist, vorzugsweise um den Faktor 5 bis 15 länger.

13. Verfahren nach dem vorhergehenden Anspruch,
**dadurch gekennzeichnet, dass** die Reinigung in einem Zyklus abläuft, umfassend:
- Zuführen des Schwarzwassers aus einem Abwassertank in den Zerkleinerungskreislauf (31),
- Zerkleinern der Grobbestandteile durch Zirkulieren des Schwarzwassers im
- Zerkleinern der Grobbestandteile durch Zirkulieren des Schwarzwassers im Zerkleinerungskreislauf (31) für eine erste Zeitdauer,
- Umschalten einer Ventilvorrichtung, um den Antischaumtank (40) aus dem Zerkleinerungskreislauf (31) in den Oxidationskreislauf zu schalten und
- Oxidationsbehandeln und Entschäumen des Schwarzwassers im Oxidationskreislauf,
- Abführen des durch die Oxidationsbehandlung des Schwarzwassers erzeugten Grauwassers in einen Puffertank (80) oder zu einer Entsorgungsöffnung.

14. Verfahren nach Anspruch 12 oder 13,
**dadurch gekennzeichnet, dass** das Abwasser im Oxidationskreislauf durch Anlegen einer Spannung an Elektroden innerhalb des Oxidationsreaktors oxidationsbehandelt wird und die Frequenz des Umschaltens zwischen der Zufuhr des Abwassers durch die obere und untere Einlassöffnung oder die Dauer des ersten und/oder des zweiten Zeitintervalls in Abhängigkeit der Stärke zwischen den Elektroden fließenden Stromes gewählt wird, insbesondere die Frequenz oder das Verhältnis zwischen dem erstem zu zweitem Zeitintervall bei einer hohen Stromstärke höher gewählt wird als bei einer kleineren Stromstärke.

15. Verfahren nach einem der vorhergehenden Ansprüche 12 bis 14,
**dadurch gekennzeichnet, dass** das Schwarzwasser vor dem Zerkleinern einer ersten Kammer (11) eines Abwasserbehälters (10) zugeführt wird, das Absinken von Schwebstoffen innerhalb dieser ersten Kammer (11) durch, vorzugsweise kontinuierliches, Einblasen von Luft im unteren Bereich der ersten Kammer verhindert wird und das Schwarzwasser über einen Überlauf aus der ersten Kammer (11) in eine zweite Kammer (16) des Abwasserbehälters geführt und hierbei Feststoffe oberhalb einer bestimmten Größe in der ersten Kammer (11) zurückgehalten werden und das Schwarzwasser aus der zweiten Kammer einer zerkleinerungsvorrichtung (30) zum Zerkleinern von Grobbestandteilen im Schwarzwasser zugeführt wird, wobei Schwebstoffe innerhalb des Schwarzwasser in der zweiten Kammer (16) durch, vorzugsweise periodisches, Einblasen von Luft im unteren Bereich der zweiten Kammer aufgewirbelt werden.

## Claims

1. Water processing and storage device, in particular for processing blackwater from an on-board toilet on board a vehicle, comprising:
- a sewage tank (10) with an inlet orifice for feeding blackwater into the sewage tank and a discharge orifice for discharging blackwater from the sewage tank,
- a macerating device (30) for macerating coarse elements in the blackwater,
- a reactor container (60) designed to subject the blackwater to an oxidative sewage cleaning process therein,
- a defoaming tank (40) designed to reduce foam generated during the sewage cleaning process, wherein
- the discharge orifice of the sewage tank (10) is connected to the macerating device (30) by means of a sewage pipe,
- the sewage pipe opens into a macerating circuit (31) in which the macerating device (30) and defoaming tank (40) are disposed,
**characterised in that**
- a first valve arrangement (22) is provided, which has a first position in which the blackwater is fed in a circulating movement in the macerating circuit (31) and a second position in which the water is fed in a circulating movement in an oxidation circuit (42, 51, 50, 52, 54, 56, 60, 61, 44, 45, 40),
- the defoaming tank (40) and the reactor container (60) being disposed in the oxidation circuit, and the defoaming tank (40)
- is of a circular design in at least a foam portion in what is a horizontal cross-section when in the operating position,
- and has a bottom inlet orifice (44) which is preferably disposed in the bottom region of the defoaming tank at such a height that it lies below the full level even when the defoaming tank is at a 50% filling level, and
- a top inlet orifice (45) lying above the bottom inlet orifice, the inflow direction of which is oriented in such a way with respect to the container wall that fluid flowing in through it runs downwards in a spiral pattern along the internal wall of the defoaming tank (40).

2. Device as claimed in claim 1,
**characterised by** a circulating device for circulating the sewage in the oxidation circuit and/or in the macerating circuit (31), and the circulating device is preferably disposed in such a way upstream of or downstream of the defoaming tank in the flow direction that it serves as a means of circulating the sewage in the oxidation circuit and in the macerating circuit, and/or the circulating device and the macerating device are preferably provided in the form of a macerating and pumping macerator (30).

3. Device as claimed in one of the preceding claims, **characterised by**
- a second valve arrangement (55) having a first position in which the blackwater is fed in the oxidation circuit in a circulating movement and a second position in which the water is discharged from the oxidation circuit.

4. Device as claimed in one of the preceding claims, **characterised in that** a pipe run for reducing eddying in the defoaming tank is disposed upstream of the bottom inlet orifice in the flow direction or directly adjacent thereto, preferably a pipe run extending obliquely or at a right angle with respect to the inflow direction, such as a T-shaped, cross-shaped or Y-shaped branching pipe run for example, and/or **characterised in that** the top inlet orifice in the foam portion of the defoaming tank is disposed at such a height that it lies above the full level when the defoaming tank is at a 50% filling level.

5. Device as claimed in one of the preceding claims, **characterised by** a third valve device (43), preferably a three-way valve, which directs the water circulating in the oxidation circuit to the bottom inlet orifice of the defoaming tank in a first valve position and directs the water circulating in the oxidation circuit to the top inlet orifice of the defoaming tank in a second valve position.

6. Device as claimed in the preceding claim, **characterised by** a control device, which is configured to switch the third valve device (43) backwards and forwards between the first and second valve position in cyclical time intervals, preferably in such a way that
- the third valve device (43) is in the first valve position for the duration of a first time interval,
- switches to the second valve position on expiry of the first time interval,
- remains in the second position for the duration of a second time interval, and
- is switched back to the first valve position again on expiry of the second time interval, whereupon the cycle is started anew.

7. Device as claimed in one of the preceding claims, **characterised in that** the reactor container (60) contains a plurality of electrodes which are connected to a current source in order to cause an oxidative treatment of the water by electrolytic decomposition of the water in contact with the electrodes in the reactor container.

8. Device as claimed in preceding claims 6 and 7, **characterised in that** the control device is configured so that the frequency of the switching of the third valve device between the intake of sewage through the top and bottom inlet orifice or the duration of the first and/or second time interval is selected as a function of the intensity of the current flowing between the electrodes and/or of a foam level in the defoaming tank detected by a foam level sensor preferably coupled with the control device in a signal-transmitting arrangement, in particular the frequency or the ratio of the first to the second time interval is selected so that it is higher at a high current intensity than it is at a lower current intensity.

9. Device as claimed in one of the preceding claims, **characterised in that** the first valve device (22) is a three-way valve which connects the outlet orifice of the sewage tank (10) to the macerating circuit (31) in a first valve position and interrupts the connection between the macerating circuit (31) and the outlet orifice of the sewage tank (10) and sets up a closed circulation circuit in a second valve position and/or
**characterised by** a fourth valve device (55) which is configured to direct the cleaned water in the oxidation circuit to a buffer tank (80) or to a disposal orifice in a first valve position and interrupt the connection between the oxidation circuit and the buffer tank or disposal orifice and set up a closed oxidation circuit in a second valve position.

10. Device as claimed in one of the preceding claims, **characterised in that** the sewage tank (10) is subdivided into a first chamber (11) and a second chamber (16) connected to one another by means of an overflow which, by means of a screen device (18) such as a rake, prevents solids above a specific size from getting out of the first chamber into the second chamber,
the intake orifice opening into the first chamber (11) and the discharge orifice opening into the second chamber (16), and
the first and second chamber preferably have nozzles in the bottom region for blowing in air, and
a control device is preferably also provided, which activates the air nozzles in the first chamber (11) continuously and activates the air nozzles in the second chamber (16) discontinuously.

11. On-board toilet for a vehicle,
**characterised by** a blackwater processing and storage device as claimed in one of the preceding claims.

12. Method of cleaning blackwater, in particular from toilets in vehicles, comprising the steps:
- macerating coarse elements in the blackwater,
- treating the blackwater by oxidation, and
- defoaming the blackwater during the oxidation treatment,
- **characterised in that** the blackwater is fed through a macerator (30) and a defoaming tank (40) during the macerating process in a macerating circuit (31) and through an oxidation reactor (60) and the defoaming tank (40) during treatment by oxidation in an oxidation circuit,
- the water circulating in the oxidation circuit is fed to a bottom inlet orifice of the defoaming tank (40) for the duration of a first time interval,
- the water circulating in the oxidation circuit is fed to a top inlet orifice of the defoaming tank (40) for the duration of a second time interval so that the water is directed into the defoaming tank (40) at a tangent in such a way that it runs downwards in a spiral pattern along a circular internal surface in a horizontal cross-section and thus breaks up the foam inside the defoaming tank,
- and the first time interval is longer than the second time interval, preferably longer by a factor of 5 to 15.

13. Method as claimed in the preceding claim, **characterised in that** cleaning is implemented in a cycle, comprising:
- feeding the blackwater out of a sewage tank into the macerating circuit (31),
- macerating the coarse elements by circulating the blackwater in the macerating circuit (31) for a first time interval,
- switching a valve device in order to switch the defoaming tank (40) out of the macerating circuit (31) into the oxidation circuit and
- treatment by oxidation and defoaming the blackwater in the oxidation circuit,
- discharging the greywater obtained from the blackwater by oxidation treatment into a buffer tank (80) or to a disposal orifice.

14. Method as claimed in claim 12 or 13, **characterised in that** the sewage in the oxidation circuit is treated by oxidation by applying a voltage to electrodes inside the oxidation reactor and the frequency of switching between feeding the sewage through the top and bottom inlet orifice or the duration of the first and/or second time interval is selected as a function of the intensity of current flowing between the electrodes, in particular the frequency or the ratio of the first to the second time interval is selected so that it is higher at a high current intensity than it is at a lower current intensity.

15. Method as claimed in one of preceding claims 12 to 14, **characterised in that** the blackwater is fed to a first chamber (11) of a sewage tank (10) prior to maceration, floating substances are prevented from sinking inside this first chamber (11) by blowing in air from the bottom region of the first chamber, preferably on a continuous basis, and the blackwater is fed via an overflow out of the first chamber (11) into a second chamber (16) of the sewage tank enabling solids above a specific size to be held back in the first chamber (11), and the blackwater is fed out of the second chamber to a macerating device (30) for macerating coarse elements in the blackwater, and floating substances within the blackwater in the second chamber (16) are swirled by blowing air in from the bottom region of the second chamber, preferably on a periodic basis.

## Revendications

1. Dispositif de traitement et de stockage d'eau, en particulier pour traiter les eaux noires des toilettes à bord d'un véhicule, comprenant :
- un réservoir d'eaux usées (10) pourvu d'une ouverture d'amenée pour amener les eaux noires dans le réservoir d'eaux usées et une ouverture d'évacuation pour évacuer les eaux noires du réservoir d'eaux usées,
- un dispositif de désintégration (30) pour désintégrer les constituants de gros calibre dans les eaux noires,
- une cuve de réacteur (60) qui est conçue pour y soumettre les eaux noires à une épuration par oxydation,
- un réservoir antimousse (40) qui est conçu pour réduire la mousse qui se forme lors de l'épuration des eaux usées,
- l'ouverture d'évacuation du réservoir d'eaux usées (10) étant reliée au dispositif de désintégration (30) par une conduite d'eaux usées,
- la conduite d'eaux usées débouchant dans un circuit de désintégration (31) dans lequel le dispositif de désintégration (30) et le réservoir antimousse (40) sont disposés,
**caractérisé en ce que**
- il comprend un système de soupape (22) qui présente une première position dans laquelle les eaux noires sont mises en circulation dans le circuit de désintégration (31) et une deuxième position dans laquelle les eaux noires sont mises en circulation dans un circuit d'oxydation (42, 51, 50, 52, 54, 56, 60, 61, 44, 45, 40)
- le réservoir antimousse (40) et la cuve de réacteur (80) étant disposés dans le circuit d'oxydation, et le réservoir antimousse (40)
- est de forme ronde dans une section transversale horizontale en position de fonctionnement dans au moins une partie mousse,
- a une ouverture d'entrée inférieure (44) qui est disposée de préférence dans la région inférieure du réservoir antimousse à une hauteur telle qu'elle se situe en dessous du niveau de remplissage méme quand le réservoir antimousse est rempli à 50%,
- a une ouverture d'entrée supérieure (45) qui est située au-dessus de l'ouverture d'entrée inférieure et dont le sens d'écoulement est orienté vers la paroi de récipient de telle manière que le liquide la traversant s'écoule vers le bas en forme de spirale le long de la paroi intérieure du réservoir antimousse (40).

2. Dispositif selon la revendication 1, **caractérisé par** un dispositif de circulation pour faire circuler les eaux usées dans le circuit d'oxydation et/ou dans le circuit de désintégration (31), le dispositif de circulation étant de préférence disposé avant ou après le réservoir antimousse dans le sens d'écoulement de manière à servir à la circulation des eaux usées dans le circuit d'oxydation et dans le circuit de désintégration, et / ou le dispositif de circulation et le dispositif de désintégration sont de préférence formés par un macérateur (30) qui désintègre et pompe.

3. Dispositif selon une quelconque des revendications précédentes, **caractérisé par** un système de soupape (55) qui présente une première position dans laquelle les eaux noires sont mises en circulation dans le circuit d'oxydation et une deuxième position dans laquelle les eaux noires sont évacuées du circuit d'oxydation.

4. Dispositif selon une quelconque des revendications précédentes,
**caractérisé en ce qu'**une partie de conduite réduisant la formation de tourbillons dans le réservoir antimousse, de préférence une partie de conduite s'étendant en oblique ou à angle droit par rapport au sens d'écoulement, comme par exemple une section de conduite se ramifiant en forme de T, en forme de croix ou en forme de Y, est disposée avant et / ou à proximité immédiate de l'ouverture d'entrée inférieure dans le sens d'écoulement, et / ou
**caractérisé en ce que** l'ouverture d'entrée supérieure est disposée dans la partie mousse du réservoir antimousse à une hauteur telle qu'elle se situe au-dessus du niveau de remplissage lorsque le réservoir antimousse est rempli à 50%.

5. Dispositif selon l'une quelconque des revendications précédentes, **caractérisé par** un troisième dispositif de soupape (43), de préférence une soupape à trois voies, qui amène dans une première position de soupape les eaux en circulation dans le circuit d'oxydation à l'ouverture d'entrée inférieure du réservoir antimousse et amène dans une deuxième position de soupape les eaux en circulation dans le circuit d'oxydation à l'ouverture d'entrée supérieure du réservoir antimousse.

6. Dispositif selon l'une quelconque des revendications précédentes, **caractérisé par** un dispositif de commande qui est conçu pour commuter à intervalles cycliques le troisième dispositif de soupape (43) entre la première et la deuxième position de soupape, de préférence de telle manière que
- le troisième dispositif de soupape (43) soit dans la première position de soupape pendant la durée d'un premier intervalle de temps,
- passe dans la deuxième position de soupape après écoulement du premier intervalle de temps,
- reste dans la deuxième position pour la durée d'un deuxième intervalle de temps, et
- repasse dans la première position de soupape après écoulement du deuxième intervalle de temps, après quoi le cycle recommence.

7. Dispositif selon l'une quelconque des revendications précédentes, **Caractérisé en ce que** la cuve de réacteur (60) contient une pluralité d'électrodes qui sont reliées à une source de courant pour provoquer un traitement par oxydation des eaux par une décomposition électrolytique des eaux se trouvant en contact avec les électrodes dans la cuve de réacteur.

8. Dispositif selon l'une quelconque des revendications précédentes 6 et 7, **caractérisé en ce que** le dispositif de commande est conçu pour sélectionner la fréquence de commutation du troisième dispositif de soupape entre l'amenée des eaux usées par l'ouverture d'entrée supérieure et inférieure ou la durée du premier et / ou du deuxième intervalle de temps en fonction de l'intensité du courant passant entre les électrodes et / ou d'un niveau de mousse dans le réservoir antimousse détecté de préférence au moyen d'un capteur de niveau de mousse couplé au dispositif de commande par la technique de signalisation, en particulier pour sélectionner la fréquence ou le rapport entre le premier et le deuxième intervalle de temps pour qu'il soit plus élevé en présence d'une intensité de courant élevée qu'en présence d'une intensité de courant plus basse.

9. Dispositif selon l'une quelconque des revendications précédentes,
caractérisé en ce le premier dispositif de soupape (22) est une soupape à trois voies qui relie, dans une première position de soupape, l'ouverture d'évacuation du réservoir d'eaux usées (10) au circuit de désintégration (31) et interrompt, dans une deuxième position de soupape, la liaison entre le circuit de désintégration (31) et l'ouverture d'évacuation du réservoir d'eaux usées (10) et établit un circuit de circulation fermé et / ou
**caractérisé par** un quatrième dispositif de soupape (55) qui est conçu pour amener, dans une première position de soupape, les eaux épurées dans le circuit d'oxydation à un réservoir tampon (80) ou une ouverture d'élimination et pour interrompre, dans une deuxième position de soupape, la liaison entre le circuit d'oxydation et le réservoir tampon ou l'ouverture d'élimination et pour établir un circuit d'oxydation fermé.

10. Dispositif selon l'une quelconque des revendications précédentes, caractérisé
en ce le réservoir d'eaux usées (10) est subdivisé en une première (11) et une deuxième (16) chambre qui sont reliées l'une à l'autre par un trop-plein qui empêche au moyen d'un dispositif de tamisage (18) tel qu'une grille de retenue, des solides au-dessus d'une grandeur déterminée de passer de la première chambre dans la deuxième chambre,
en ce que l'ouverture d'amenée débouche dans la première chambre (11), l'ouverture d'évacuation débouche dans la deuxième chambre (16), et
en ce que la première et la deuxième chambre présentent de préférence des buses pour insuffler de l'air dans la région inférieure, et
en ce qu'un dispositif de commande est en outre de préférence prévu, lequel commande de manière continue les buses d'air dans la première chambre (11) et commande de manière discontinue les buses d'air dans la deuxième chambre (16).

11. Toilettes de bord pour un véhicule, **caractérisées par** un dispositif de traitement et de stockage des eaux noires selon l'une quelconques des revendications précédentes.

12. Procédé d'épuration des eaux noires, en particulier provenant de toilettes dans des véhicules, comprenant les étapes :
- désintégrer les constituants de gros calibre dans les eaux noires,
- traiter par oxydation les eaux noires, et
- démousser les eaux noires pendant le traitement par oxydation,
- **caractérisé en ce que** les eaux noires sont guidées à travers un désintégrateur (30) et un réservoir antimousse (40) pendant la désintégration dans un circuit de désintégration (31) et sont guidées à travers un réacteur d'oxydation (60) et le réservoir antimousse (40) pendant le traitement par oxydation dans un circuit d'oxydation,
- amener les eaux en circulation dans le circuit d'oxydation a une ouverture d'entrée inférieure du réservoir antimousse (40) pour la durée d'un premier intervalle de temps,
- amener les eaux en circulation dans le circuit d'oxydation à une ouverture d'entrée supérieure du réservoir antimousse (40) pour la durée d'un deuxième intervalle de temps de telle manière que les eaux soient introduites tangentiellement dans le réservoir antimousse (40) de manière à s'écouler vers le bas en forme de spirale sur une surface intérieure de forme ronde dans une section transversale horizontale et à briser ainsi la mousse à l'intérieur du réservoir antimousse,
- le premier intervalle de temps étant plus long que le deuxième intervalle de temps, de préférence plus long du facteur 5 à 15.

13. Procédé selon la revendication précédente, **caractérisé en ce que** l'épuration se déroule en un cycle, comprenant :
- amener les eaux noires d'un réservoir d'eaux usées dans le circuit de désintégration (31),
- désintégrer les constituants de gros calibre par mise en circulation des eaux noires dans le circuit de désintégration (31),
- commuter un dispositif de soupape pour faire passer le réservoir antimousse (40) du circuit de désintégration (31) dans le circuit d'oxydation,
- traiter par oxydation et démousser les eaux noires dans le circuit d'oxydation,
- évacuer les eaux grises produites par le traitement d'oxydation des eaux noires dans un réservoir tampon (80) ou vers une ouverture d'élimination.

14. Procédé selon la revendication 12 ou 13, **caractérisé en ce que** les eaux usées dans le circuit d'oxydation sont traitées par oxydation dans le réacteur d'oxydation par application d'une tension aux électrodes et la fréquence de commutation entre l'amenée des eaux usées par l'ouverture d'entrée supérieure et inférieure ou la durée du premier et/ou du deuxième intervalle de temps est sélectionnée en fonction de l'intensité du courant passant entre les électrodes, en particulier la fréquence ou le rapport entre le premier et le deuxième intervalle de temps est sélectionné plus élevé en présence d'une forte intensité de courant élevée qu'en présence d'une intensité de courant plus faible.

15. Procédé selon l'une quelconque des revendications 12 à 14, **caractérisé en ce que** les eaux noires sont amenées avant la désintégration à une première chambre (11) d'un réservoir d'eaux usées (10), l'enfoncement de matières en suspension à l'intérieur de cette première chambre (11) est empêchée par insufflation, de préférence continue, d'air dans la région inférieure de la première chambre et les eaux noires sont guidées par un trop-plein de la première chambre (11) dans une deuxième chambre (16) du réservoir d'eaux usées et les matières solides au-dessus d'une grandeur déterminée sont de ce fait retenues dans la première chambre (11) et les eaux noires sont amenées de la deuxième chambre à un dispositif de désintégration (30) pour désintégrer les constituants de gros calibre dans les eaux noires, les matières en suspension dans les eaux noires étant soulevées en tourbillons dans la deuxième chambre (16) par insufflation, de préférence périodique, d'air dans la région inférieure de la deuxième chambre.
